# EUROPEAN PATENT APPLICATION

(11) **EP 4 261 198 A1**
(43) Date of publication of application: **18.10.2023**
(21) Application number: 23167776.6
(22) Date of filing: 13.04.2023
(51) Int. Cl.: C04B 41/89, C04B 35/14, C04B 35/16, C04B 35/488, C04B 35/622, C04B 35/628, C04B 41/00, C04B 41/52, C23C 16/42, C23C 16/455

(54) **ENVIRONMENTAL BARRIER COATING AND METHOD OF MAKING THE SAME**

(30) Priority: 15.04.2022 US 202263331324 P
(71) Applicant: Raytheon Technologies Corporation, Farmington, CT 06032 (US)
(72) Inventor: BEALS, James T., West Hartford (US); WESLEY JACKSON III, Richard, Mystic (US); TANG, Xia, West Hartford (US); HAZEL, Brian T., Avon (US); LITTON, David A., West Hartford (US)
(74) Representative: Dehns

(57) **Abstract**

A feedstock for spray deposition of a coating includes particles each including a particle core and a coating. The particle core is a gettering particle. The coating includes at least one of diffusive material, precursor diffusive material, matrix material, and precursor matrix material. A method of coating a substrate is also disclosed.

## Description

### BACKGROUND

A gas turbine engine typically includes a fan section, a compressor section, a combustor section and a turbine section. Air entering the compressor section is compressed and delivered into the combustion section where it is mixed with fuel and ignited to generate a high-energy exhaust gas flow. The high-energy exhaust gas flow expands through the turbine section to drive the compressor and the fan section. The compressor section typically includes low and high pressure compressors, and the turbine section includes low and high pressure turbines.

This disclosure relates to composite articles, such as those used in gas turbine engines, and methods of coating such articles. Components, such as gas turbine engine components, may be subjected to high temperatures, corrosive and oxidative conditions, and elevated stress levels. In order to improve the thermal and/or oxidative stability, the component may include a protective barrier coating.

### SUMMARY

A feedstock for spray deposition of a coating (e.g. a feedstock for use in a method as herein described) according to an exemplary embodiment of this disclosure, among other possible things includes particles each including a particle core and a coating. The particle core is a gettering particle. The coating includes at least one of diffusive material, precursor diffusive material, matrix material, and precursor matrix material.

In a further example of the foregoing, a diameter of the particle core is between about 5 and 50 times greater than a thickness of the coating.

In a further example of any of the foregoing, an average diameter of the particles is between about 20 and about 60 microns.

In a further example of any of the foregoing, the coating includes at least two coating layers.

In a further example of any of the foregoing, the coating includes a material configured to melt during thermal spray deposition of the coating.

In a further example of any of the foregoing, the feedstock includes a first feedstock comprising first particles having first particle cores and first coatings, and a second feedstock comprising second particles having second particle cores and second coatings.

In a further example of any of the foregoing, the particle core includes at least one of a silicide, silicon oxycarbide, and silicon carbide.

In a further example of any of the foregoing, the matrix material is silicon dioxide or a precursor of silicon dioxide.

In a further example of any of the foregoing, the coating includes diffusive material or precursor diffusive material and matrix material or precursor matrix material.

In a further example of any of the foregoing, the coating includes a sacrificial material.

In a further example of any of the foregoing, the coating includes a precursor matrix material, and the precursor matrix material is a rare earth oxide.

A method of coating a substrate according to an exemplary embodiment of this disclosure, among other possible things includes directing a feedstock (e.g. a feedstock as herein described) against a substrate such that the feedstock forms a bond coat on the substrate. The feedstock comprises particles each including a particle core and a coating. The particle core is a gettering particle and the coating includes at least one of diffusive material, precursor diffusive material, matrix material, and precursor matrix material.

In a further example of the foregoing, the substrate is a ceramic matrix composite.

In a further example of any of the foregoing, the method also includes the step of roughening a surface of the substrate prior to the directing step.

In a further example of any of the foregoing, the coating includes at least one of a precursor diffusive material and a precursor matrix material. The precursor diffusive material or precursor matrix material is transformed into diffusive particles or matrix, respectively, during the directing step.

In a further example of any of the foregoing, the coating includes at least one of a precursor diffusive material and a precursor matrix material. The coating also includes transforming the precursor diffusive material or precursor matrix material into diffusive particles or matrix, respectively, by heat treatment after the directing step.

In a further example of any of the foregoing, the feedstock includes a first feedstock comprising first particles having first particle cores and first coatings, and a second feedstock comprising second particles having second particle cores and second coatings.

In a further example of any of the foregoing, the particle core includes at least one of a silicide, silicon oxycarbide, and silicon carbide.

In a further example of any of the foregoing, the coating includes precursor matrix material. The precursor matrix material is a rare earth oxide. The precursor matrix material is transformed into a rare earth silicate during the directing step.

In a further example of any of the foregoing, an average diameter of the particles is between about 20 and about 60 microns.

### BRIEF DESCRIPTION OF THE DRAWINGS

Certain exemplary embodiments will now be described in greater detail by way of example only and with reference to the accompanying drawings in which:
Figure 1 is a schematic view of an example gas turbine engine.
Figure 2 illustrates an article for the gas turbine engine of claim 1 with a coating.
Figure 3 illustrates an example coated particle for spray deposition of the coating of Figure 2.

### DETAILED DESCRIPTION

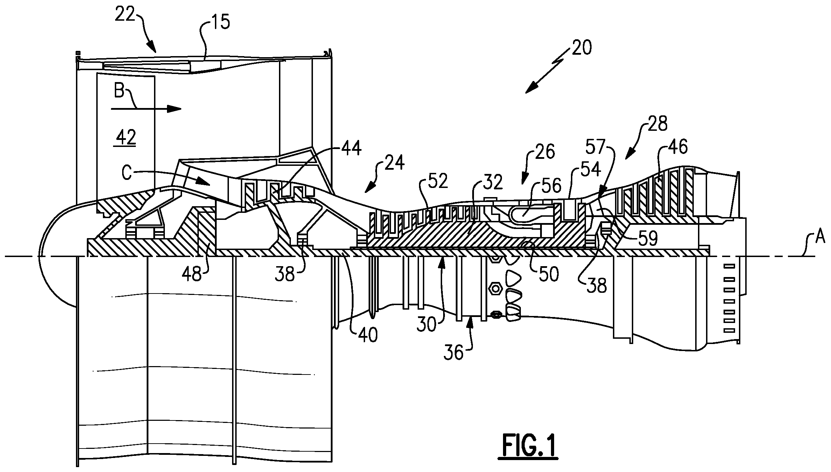

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. The fan section 22 drives air along a bypass flow path B in a bypass duct defined within a housing 15 such as a fan case or nacelle, and also drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive a fan 42 at a lower speed than the low speed spool 30. The high speed spool 32 includes an outer shaft 50 that interconnects a second (or high) pressure compressor 52 and a second (or high) pressure turbine 54. A combustor 56 is arranged in the exemplary gas turbine 20 between the high pressure compressor 52 and the high pressure turbine 54. A mid-turbine frame 57 of the engine static structure 36 may be arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded through the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of the low pressure compressor, or aft of the combustor section 26 or even aft of turbine section 28, and fan 42 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), and can be less than or equal to about 18.0, or more narrowly can be less than or equal to 16.0. The geared architecture 48 is an epicyclic gear train, such as a planetary gear system or other gear system, with a gear reduction ratio of greater than about 2.3. The gear reduction ratio may be less than or equal to 4.0. The low pressure turbine 46 has a pressure ratio that is greater than about five. The low pressure turbine pressure ratio can be less than or equal to 13.0, or more narrowly less than or equal to 12.0. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to an inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1 and less than about 5:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 35,000 feet (10,668 meters). The flight condition of 0.8 Mach and 35,000 ft (10,668 meters), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. The engine parameters described above and those in this paragraph are measured at this condition unless otherwise specified. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45, or more narrowly greater than or equal to 1.25. "Low corrected fan tip speed" is the actual fan tip speed in ft/sec divided by an industry standard temperature correction of [(Tram °R) / (518.7 °R)]^{0.5}. The "Low corrected fan tip speed" as disclosed herein according to one non-limiting embodiment is less than about 1150.0 ft / second (350.5 meters/second), and can be greater than or equal to 1000.0 ft / second (304.8 meters/second).

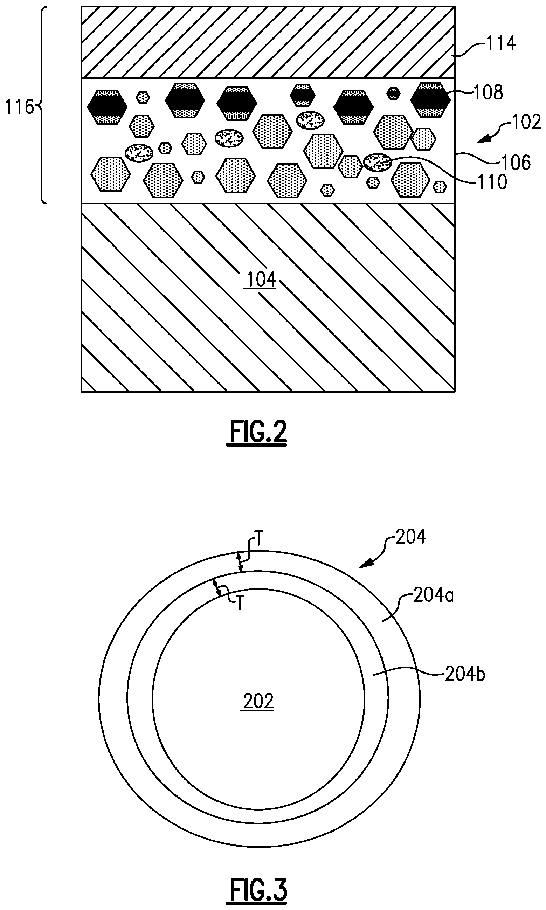

Figure 2 schematically illustrates a representative portion of an example article 100 for the gas turbine engine 20 that includes a composite material bond coat 102 that acts as a barrier layer. The article 100 can be, for example, an airfoil in the compressor section 24 or turbine section 28, a combustor liner panel in the combustor section 26, a blade outer air seal, or other component that would benefit from the examples herein. In this example, the bond coat 102 is used as an environmental barrier layer to protect an underlying substrate 104 from environmental conditions, as well as thermal conditions. As will be appreciated, the bond coat 102 can be used as a stand-alone barrier layer, as an outermost/top coat with additional underlying layers, or in combination with other coating under- or over-layers, such as, but not limited to, ceramic-based topcoats.

The bond coat 102 includes a matrix 106, a dispersion of "gettering" particles 108, and a dispersion of diffusive particles 110. The matrix 106 may be silicon dioxide (SiO₂), in one example. In one example, the gettering particles 108 are silicon oxycarbide particles (SiOC) or silicide particles such as molybdenum disilicide (MoSi₂) particles 108, though other examples are contemplated. The gettering particles 108 could be, for instance, molybdenum disilicide particles, tungsten disilicide particles, vanadium disilicide particles, niobium disilicide particles, silicon oxycarbide particles, silicon carbide (SiC) particles, silicon nitride (Si₃N₄) particles, silicon oxycarbonitride (SiOCN) particles, silicon aluminum oxynitride (SiAlON) particles, silicon boron oxycarbonitride (SiBOCN) particles, or combinations thereof. The diffusive particles 110 could be, for instance, barium magnesium alumino-silicate (BMAS) particles, barium strontium aluminum silicate particles, magnesium silicate particles, calcium aluminosilicate particles (CAS), alkaline earth aluminum silicate particles, yttrium aluminum silicate particles, ytterbium aluminum silicate particles, other rare earth metal aluminum silicate particles, or combinations thereof.

The bond coat 102 protects the underlying substrate 104 from oxygen and moisture. For example, the substrate 104 can be a ceramic-based substrate, such as a silicon-containing ceramic material. One example is silicon carbide. Another non-limiting example is silicon carbide fibers in a silicon carbide matrix. The gettering particles 108 and the diffusive particles 110 function as an oxygen and moisture diffusion barrier to limit the exposure of the underlying substrate 104 to oxygen and/or moisture from the surrounding environment. Without being bound by any particular theory, the diffusive particles 110, such as BMAS particles 110, enhance oxidation and moisture protection by diffusing to the outer surface of the barrier layer opposite of the substrate 104 and forming a sealing layer that seals the underlying substrate 104 from oxygen/moisture exposure. Additionally, cationic metal species of the diffusive particles 110 (for instance, for BMAS particles, barium, magnesium, and aluminum) can diffuse into the gettering particles 108 to enhance oxidation stability of the gettering material. Further, the diffusion behavior of the diffusive particles 110 may operate to seal any microcracks that could form in the barrier layer. Sealing the micro-cracks could prevent oxygen from infiltrating the barrier layer, which further enhances the oxidation resistance of the barrier layer. The gettering particles 108 can react with oxidant species, such as oxygen or water that could diffuse into the bond coat 102. In this way, the gettering particles 108 could reduce the likelihood of those oxidant species reaching and oxidizing the substrate 104.

In some examples, a ceramic-based top coat 114 is interfaced with the bond coat 102. As an example, the ceramic-based top coat 114 can include one or more layers of an oxide-based material. The oxide-based material can be, for instance, hafnium-based oxides or yttrium-based oxides (such as hafnia, hafnium silicate, yttrium silicate, yttria stabilized zirconia or gadolinia stabilized zirconia), or combinations thereof, but is not limited to such oxides.

The top coat 114 and bond coat 102 together form a barrier coating 116 for the substrate 104.

Barrier coatings 116 and in particular the bond coat 102 are typically applied to substrate 104 by a multi-step process including applying a slurry containing the bond coat 102 constituents, and sintering the bond coat 102. Conventional bond coat 102 constituents are not suitable for application by spray method such as thermal spray (e.g., plasma spray) or cold spray because the constituents degrade during the spray process and/or fail to adhere to the substrate 104. In general, spray deposition processes involve directing feedstock including particles against a substrate, and energizing the particles such that the particles adhere to the substrate to form a coating on the substrate.

In particular, gettering particles 108 are susceptible to degradation during some spray processes. Thus the gettering particles 108 would degrade before reaching the substrate 104. For instance, gettering particles 108 including silicon carbide are likely to be oxidized and/or vaporized during thermal spray. Gettering particles 108 including silicon oxycarbide undergo carbo-thermal reduction during thermal spray. However, it would be advantageous to apply bond coat 102 by a spray process because such processes are simpler and faster than the slurry method described above.

To that end, it has been discovered that providing a protective coating to gettering particles 108 makes the gettering particles 108 suitable for deposition by spraying. Moreover, the coating can include other constituents of the bond coat 102, or precursors of such constituents, such that deposition of the coated gettering particles by spray results in bond coat 102.

Figure 3 shows a cutaway view of an example coated particle 200 for deposition of the bond coat 102 by spray such as thermal spray or cold spray processes, which are known in the art. The coated particles 200 make up a feedstock for spray deposition. The particle core 202 includes gettering phase material such as any of the example gettering particles 108 discussed above. The particle core 202 is coated or clad with a coating 204 comprising one or more layers 204a/204b. In the example of Figure 3, there are two coating layers 204a/204b, though in other examples more or fewer coating layers could be used.

The coating layers 204a/204b each have a thickness T which can be the same or different. In one example, the diameter of the particle core 202 is between about 5 and 50 times greater than the total thickness of the coating 204 (e.g., the sum of the thicknesses of the coating layers 204a/204b). In a particular example, the average size of coated particles 200 is between about 10 and about 60 microns and the total thickness of the coating 204 (i.e., the sum of thicknesses T of each coating layer 204a/20b4) is between about 0.5 and 5 microns. In a particular example, the median particle 200 size is between about 25 and about 50 microns.

The coating 204 includes constituents of the bond coat 102 or precursors of such constituents. Particularly, the coating 204 includes diffusive material such as any of the example materials for diffusive particles 110 discussed above, or precursors to those materials. A precursor diffusive material is a material that becomes diffusive material by reaction or other transformation during or after the spray process. Upon or after deposition of the particles 200 by spraying, the diffusive material or precursor forms diffusive particles 110 in the bond coat 102. For instance, the diffusive material or precursor diffusive material could be provided in discrete areas of the coating 204, or could make up a layer 204a/204b of a multi-layer coating 204. In either case, spray of the particle 200 including the diffusive material or precursor diffusive material results in diffusive particles 110 in the bond coat 102 as described herein.

Similarly, the coating 204 includes matrix materials such as any of the example matrix 106 materials discussed above, or precursors to those materials. A precursor matrix material is a material that becomes matrix material by reaction or other transformation during or after the spray process. For instance, the matrix material or precursor matrix material could be provided in discrete areas of the coating 204, or could make up a layer 204a/204b of a multi-layer coating 204. Upon deposition of the particles 200 by spray, the matrix material or precursor forms matrix 106 as described herein.

In a particular example, the matrix 106 include silicates such as hafnium silicate or yttrium silicate, or other rare earth silicates. In this example, the coating 204 includes precursor rare earth oxides such as hafnium oxide or yttrium oxides which react with silicon to form the silicates during the spray deposition. For instance, silicon can be co-deposited with the particles 200 according to known co-deposition methods for spray processes. In another example, silicon can be included in the coating 204. The resulting silicates form part of the matrix 106 after the spray deposition.

In this way, the diffusive material, matrix material, or precursors serve both as a protective coating for the particle core 202 and become part of the bond coat 102 upon deposition by spray.

For multilayer coatings 204, the coating layers 204a/204b can be the same or different. For instance, one layer 204a may include diffusive material and/or precursor diffusive material while a second layer 204b includes matrix material and/or precursor matrix material. In another example, one or both of the layers 204a/204b include both diffusive material and/or precursor diffusive material and matrix material and/or precursor matrix material.

In one example particularly suited for thermal spray deposition, the coating 204 includes a melting layer. In the example where the coating 204 includes multiple layers 204a/204b, the melting layer is the outermost layer 204b. The melting layer is formed from a material that melts or otherwise becomes soft/flowing during thermal spray, forming a molten layer that adheres the coated particle 200 to the substrate 104 during thermal spray. For instance, the melting material can be an oxide sintering aid such as silica, yttria, alumina, magnesia, or calcia, which forms matrix 106 upon deposition onto the substrate 104.

Another example melting material is silicon, which is a precursor of silicon dioxide and can be converted to silicon dioxide matrix 106 by oxidation after deposition onto the substrate 104, either by reaction with other oxidating constituents of the bond coat 102 or by any other known method.

In particular, the melting material melts more readily than the material of the particle core 202 during the thermal spray deposition. That is, the melting material has a melting point at or near the temperature at which thermal spray deposition occurs, while the particle core 202 has a significantly higher melting point. Moreover, in this example, the melting material melts rather than decomposes at the temperatures at which thermal spray deposition occurs. Thermal spray deposition typically occurs at temperatures between about 1800°C and 3200°C.

In some examples, the coating 204 can include some sacrificial material. That is, some of the sacrificial material is vaporized or otherwise removed from the particle 200 during the spray deposition. Still, the sacrificial material protects the particle core 202 during the spray deposition and may also serve as a reactant source for transformation of precursor materials into diffusive material and/or matrix material. One particular example is silicon dioxide (silica), which is known to vaporize during thermal spray processes. However, where silica is a desired constituent of the bond coat 102, the coating 204 contains large amounts of silica such that some of the silica survives the thermal spray process and becomes part of the bond coat 102. In examples where the coating 204 is a multilayer coating, the sacrificial material can be included in inner layer 204a to minimize material loss.

The coating 204 can be applied to the particle core 202 by atomic layer deposition (ALD), vapor deposition such as chemical vapor deposition (CVD), sol-gel or other solution chemistry processes, or any other method of forming substantially uniform coatings on particles. ALD is particularly suited for the deposition of discrete multi-layer coatings 204.

In the examples described above, the coating 204 includes diffusive materials or precursor diffusive materials and matrix materials or precursor matrix materials. However, it should be understood that the bond coat 102 can also be formed by co-deposition of coated particles 200 having different coatings 204 and different particle cores 202. For instance, first particles 200 having a coating 204 comprising diffusive materials or precursor diffusive materials can be co-deposited with second particles 200 having a coating 204 comprising matrix materials or precursor matrix materials according to known co-deposition methods for forming the bond coat 102.

Moreover, it should be understood that even where the coating 204 includes both diffusive materials or precursor diffusive materials and matrix materials or precursor matrix materials, one or more types of particles 200 having various particle cores 202 and various coatings 204 including diffusive materials or precursor diffusive materials, matrix materials or precursor matrix materials, or both can be co-deposited according to known co-deposition methods to form the desired bond coat 102.

Additionally, in the case where the coating includes precursor diffusive materials or precursor matrix materials, the particles 200 can be co-deposited with reactant materials according to any known co-deposition method. The reactant materials react with the precursor materials during the spray deposition to form the diffusive materials or matrix materials upon deposition onto the substrate 104. For instance, as discussed above, precursor oxides may be included in the coating 204, and the precursor oxides can be co-deposited with silicon such that silicate matrix materials are formed upon deposition onto the substrate 104.

In one example, the bond coat 102 applied by spray of the coated particles 200 comprises between about 50 and 80 percent by weight gettering particles 108, about 5 percent diffusive particles 110, and the balance matrix 106. In this example, the thickness T of the coating layer or layers 204a/204b and the makeup of the layer or layers 204a/204b is selected to provide the desired bond coat 102 composition.

In a particular example, the bond coat 102 applied by spray of the coated particles 200 has a porosity less than about 25 percent.

In some examples, the bond coat 102 undergoes optional heat treatment after the spray deposition to effect transformation of the precursor materials into the diffusive particles 110 and/or matrix 106.

In some examples, the substrate 104 is pre-treated prior to the deposition of the bond coat 102 by spray deposition. For instance, the pre-treatment can include roughening a surface of the substrate 104 by grit blasting, etching, or any other known method. The increased surface roughness improves adhesion of the bond coat 102 to the substrate 104 during and after the spray deposition.

The top coat 114 can be applied over the bond coat 102 after deposition of the bond coat 102 by any known method.

As used herein, the term "about" has the typical meaning in the art, however in a particular example "about" can mean deviations of up to 10% of the values described herein.

Although the different examples are illustrated as having specific components, the examples of this disclosure are not limited to those particular combinations. It is possible to use some of the components or features from any of the embodiments in combination with features or components from any of the other embodiments.

Certain embodiments of the present disclosure are as follows:
1. A feedstock for spray deposition of a coating, comprising:
   particles each including a particle core and a coating, where in the particle core is a gettering particle and the coating includes at least one of diffusive material, precursor diffusive material, matrix material, and precursor matrix material.
2. The feedstock of embodiment 1, wherein a diameter of the particle core is between about 5 and 50 times greater than a thickness of the coating.
3. The feedstock of embodiment 2, wherein an average diameter of the particles is between about 20 and about 60 microns.
4. The feedstock of embodiment 1, wherein the coating includes at least two coating layers.
5. The feedstock of embodiment 1, wherein the coating includes a material configured to melt during thermal spray deposition of the coating.
6. The feedstock of embodiment 1, wherein the feedstock includes a first feedstock comprising first particles having first particle cores and first coatings, and a second feedstock comprising second particles having second particle cores and second coatings.
7. The feedstock of embodiment 1, wherein the particle core includes at least one of a silicide, silicon oxycarbide, and silicon carbide.
8. The feedstock of embodiment 1, wherein the matrix material is silicon dioxide or a precursor of silicon dioxide.
9. The feedstock of embodiment 1, wherein the coating includes diffusive material or precursor diffusive material and matrix material or precursor matrix material.
10. The feedstock of embodiment 1, wherein the coating includes a sacrificial material.
11. The feedstock of embodiment 1, wherein the coating includes a precursor matrix material, and the precursor matrix material is a rare earth oxide.
12. A method of coating a substrate, comprising:
   directing a feedstock against a substrate such that the feedstock forms a bond coat on the substrate, wherein the feedstock comprises particles each including a particle core and a coating, where in the particle core is a gettering particle and the coating includes at least one of diffusive material, precursor diffusive material, matrix material, and precursor matrix material.
13. The method of embodiment 12, wherein the substrate is a ceramic matrix composite.
14. The method of embodiment 12, further comprising the step of roughening a surface of the substrate prior to the directing step.
15. The method of embodiment 12, wherein the coating includes at least one of a precursor diffusive material and a precursor matrix material, and wherein the precursor diffusive material or precursor matrix material is transformed into diffusive particles or matrix, respectively, during the directing step.
16. The method of embodiment 12, wherein the coating includes at least one of a precursor diffusive material and a precursor matrix material, and further comprising transforming the precursor diffusive material or precursor matrix material into diffusive particles or matrix, respectively, by heat treatment after the directing step.
17. The method of embodiment 12, wherein the feedstock includes a first feedstock comprising first particles having first particle cores and first coatings, and a second feedstock comprising second particles having second particle cores and second coatings.
18. The method of embodiment 12, wherein the particle core includes at least one of a silicide, silicon oxycarbide, and silicon carbide.
19. The method of embodiment 12, wherein the coating includes precursor matrix material, wherein the precursor matrix material is a rare earth oxide, and wherein the precursor matrix material is transformed into a rare earth silicate during the directing step.
20. The method of embodiment 12, wherein an average diameter of the particles is between about 20 and about 60 microns.

The foregoing description shall be interpreted as illustrative and not in any limiting sense. A worker of ordinary skill in the art would understand that certain modifications could come within the scope of this disclosure. For these reasons, the following claims should be studied to determine the true scope and content of this disclosure.

## Claims

1. A feedstock for spray deposition of a coating, comprising:
particles each including a particle core and a coating, where in the particle core is a gettering particle and the coating includes at least one of diffusive material, precursor diffusive material, matrix material, and precursor matrix material.

2. The feedstock of claim 1, wherein a diameter of the particle core is between about 5 and 50 times greater than a thickness of the coating; and/or wherein an average diameter of the particles is between about 20 and about 60 microns.

3. The feedstock of claim 1 or claim 2, wherein the coating includes at least two coating layers.

4. The feedstock of any preceding claim, wherein the coating includes a material configured to melt during thermal spray deposition of the coating.

5. The feedstock of any preceding claim, wherein the feedstock includes a first feedstock comprising first particles having first particle cores and first coatings, and a second feedstock comprising second particles having second particle cores and second coatings.

6. The feedstock of any preceding claim, wherein the particle core includes at least one of a silicide, silicon oxycarbide, and silicon carbide; and/or wherein the matrix material is silicon dioxide or a precursor of silicon dioxide.

7. The feedstock of any preceding claim, wherein the coating includes diffusive material or precursor diffusive material and matrix material or precursor matrix material.

8. The feedstock of any preceding claim, wherein the coating includes a sacrificial material.

9. The feedstock of any preceding claim, wherein the coating includes a precursor matrix material, and the precursor matrix material is a rare earth oxide.

10. A method of coating a substrate, comprising:
directing the feedstock of any preceding claim against a substrate such that the feedstock forms a bond coat on the substrate.

11. The method of claim 10, wherein the substrate is a ceramic matrix composite.

12. The method of claim 10 or claim 11, further comprising the step of roughening a surface of the substrate prior to the directing step.

13. The method of any of claims 10 to 12, wherein the coating includes at least one of a precursor diffusive material and a precursor matrix material, and wherein the precursor diffusive material or precursor matrix material is transformed into diffusive particles or matrix, respectively, during the directing step.

14. The method of any of claims 10 to 12, wherein the coating includes at least one of a precursor diffusive material and a precursor matrix material, and further comprising transforming the precursor diffusive material or precursor matrix material into diffusive particles or matrix, respectively, by heat treatment after the directing step.

15. The method of any of claims 10 to 12, wherein the coating includes precursor matrix material, wherein the precursor matrix material is a rare earth oxide, and wherein the precursor matrix material is transformed into a rare earth silicate during the directing step.
